# EUROPEAN PATENT APPLICATION

(11) **EP 4 786 514 A1**
(43) Date of publication of application: **05.08.2026**
(21) Application number: 24871663.1
(22) Date of filing: 27.08.2024
(51) Int. Cl.: C08G 18/61, C08G 18/32, C08G 18/38, C08G 18/65, C08G 18/73, C08G 18/75

(54) **POLYUREA POLYMER, POLYUREA COMPOSITION, AND METHODS FOR PRODUCING SAME**

(30) Priority: 29.09.2023 JP 2023170104
(71) Applicant: SHIN-ETSU CHEMICAL CO., LTD., Tokyo 100-0005 (JP)
(72) Inventor: ANDO, Yuji, Annaka-shi, Gunma 379-0224 (JP); SAKUTA, Koji, Annaka-shi, Gunma 379-0224 (JP); MEGURIYA, Noriyuki, Annaka-shi, Gunma 379-0224 (JP)
(74) Representative: Mewburn Ellis LLP
(86) International application number: PCT/JP2024/030483
(87) International publication number: WO 2025/069862

(57) **Abstract**

Provided is a polyurea polymer that is a product of a reaction between:
(a) an amino group-containing organopolysiloxane which is represented by general formula (1) and has an amine equivalent weight of 235-1500 g/mol 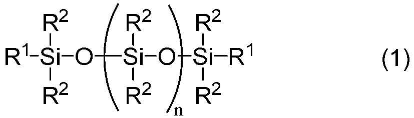 (in the formula, R¹ moieties are each independently a monovalent hydrocarbon group which has a primary or secondary amino group and has 1-20 carbon atoms, R² moieties are each independently a monovalent hydrocarbon group having 1-20 carbon atoms, and n is a value that satisfies the amine equivalent weight);
(b) an aliphatic diisocyanate compound having two isocyanate groups per molecule; and
(c) an amine compound having two or more amino groups per molecule (excluding component (a)).

Also provided is a polyurea composition containing this polymer and an alcohol having one secondary hydroxyl group or one tertiary hydroxyl group per molecule.

## Description

### TECHNICAL FIELD

The present invention relates to a polyurea polymer, a polyurea composition, and methods for preparing these.

### BACKGROUND ART

Polyurea resins can be processed into various shapes since they can exhibit tensile strength, flex resistance, abrasion resistance and oil resistance and can be made thermoplastic or thermosetting depending on how they are formulated.

Polyamines, isocyanates, chain extenders and the like are used as the starting materials for polyurea resins, and in recent years it has been proposed to copolymerize reactive siloxanes such as amino-group containing siloxanes as the polyamine component (Patent Document 1). Patent Document 1 proposes siloxane-modified polyurea fibers and a method for their production.

However, when a diamine is used as the chain extender mentioned in Patent Document 1 and the reaction is carried out in the absence of a solvent, the reaction mixture solidifies, preventing stirring and resulting in a heterogeneous polymer. While it is possible to add the solvents described in Patent Document 1 and carry out the polymerization, only highly polar solvents such as DMF and DMAc can maintain a molten state during the polymerization. Also, as disclosed in Patent Document 1, alcohol solvents (monoalcohols) are used as end-capping agents for isocyanates and are therefore cannot be used as solvents. For this reason, high-boiling point solvents such as DMF and DMAc have been used.

However, since highly polar solvents tend to have high boiling points and low volatility, making them difficult to work with, there is a strong desire for alternatives to these solvents. Although, after synthesis using DMF or DMAc solvent, it is possible to replace it with a low-boiling solvent, it is time-consuming and uneconomical. Hence, there exists a need to carry out the synthesis with a low-boiling solvent from the outset.

Patent Document 2 proposes a method that uses a chlorinated solvent as the reaction solvent. However, chlorinated solvents are difficult to use because various regulations are imposed on their use, disposal, etc.

### PRIOR ART DOCUMENTS

### PATENT DOCUMENTS

Patent Document 1: WO 2016/158967
Patent Document 2: JP-A S63-3029

### SUMMARY OF INVENTION

### TECHNICAL PROBLEM

The present invention was arrived at in light of the above circumstances. An object of the invention is to provide a polyurea polymer which is soluble in a volatile, low-boiling solvent and which also has high strength. Another objects are to provide a polyurea composition containing such a polyurea polymer, and methods for preparing the polyurea polymer and the polyurea composition.

### SOLUTION TO PROBLEM

The inventors have conducted intensive investigations aimed at achieving the above objects. As a result, they have discovered that a polyurea polymer obtained from an organopolysiloxane having a given amine equivalent weight, an aliphatic diisocyanate compound and an amine compound having two or more amino groups per molecule can solve the above problems. In addition, they have also found that this polyurea polymer can be synthesized using a secondary alcohol or a tertiary alcohol as the solvent. These discoveries ultimately led to the present invention.

Accordingly, the invention provides:
1. A polyurea polymer that is a reaction product of:
   (a) an amino group-containing organopolysiloxane of general formula (1) below which has an amine equivalent weight of from 235 to 1,500 g/mol 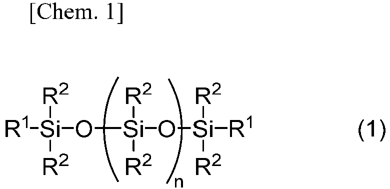 (wherein each R¹ is independently a monovalent hydrocarbon group of 1 to 20 carbon atoms which has a primary or secondary amino group, each R² is independently a monovalent hydrocarbon group of 1 to 20 carbon atoms, n is a value that satisfies the amine equivalent weight, and the siloxane units within parentheses may be bonded in any order),
   (b) an aliphatic diisocyanate compound having two isocyanate groups per molecule, and
   (c) an amine compound having two or more amino groups per molecule (exclusive of component (a));
2. The polyurea polymer of 1 above, wherein component (c) is a compound of formula (4) below

   H₂N-R-NH₂ (4)

   (wherein R is a substituted or unsubstituted divalent hydrocarbon group of 1 to 20 carbon atoms);
3. A method for preparing the polyurea polymer of 1 or 2 above, which method includes the step of reacting components (a) to (c) in an alcohol having one secondary hydroxyl group or tertiary hydroxyl group per molecule to form a polyurea polymer;
4. A polyurea composition which includes:
   (A) the polyurea polymer of 1 or 2 above, and
   (B) an alcohol having one secondary hydroxyl group or tertiary hydroxyl group per molecule;
5. The polyurea composition of 4 above which is a solution of the polyurea polymer of component (A) dissolved in the alcohol of component (B); and
6. A method for preparing the polyurea composition of 5 above, which method includes the step of reacting components (a) to (c) in the alcohol of component (B) to synthesize the polyurea polymer of component (A), thereby obtaining a polyurea composition which is a solution of the polyurea polymer of component (A) dissolved in the alcohol of component (B).

### ADVANTAGEOUS EFFECTS OF INVENTION

The polyurea polymer of the invention is more soluble in solvents having a low boiling point and high volatility than conventional polyurea polymers and also has excellent strength.

### DESCRIPTION OF EMBODIMENTS

The invention is described in detail below.

### [1] Polyurea Polymer

The polyurea polymer of the invention is obtained by reacting components (a) to (c) below:
(a) an amino group-containing organopolysiloxane of general formula (1) below which has an amine equivalent weight of from 235 to 1,500 g/mol,
(b) an aliphatic diisocyanate compound having two isocyanate groups per molecule, and
(c) an amine compound having two or more amino groups per molecule.

### [Component (a)]

Component (a) used in this invention is an amino group-containing organopolysiloxane of general formula (1) below which has an amine equivalent weight of from 235 to 1,500 g/mol. It serves as a base component of the polyurea polymer of the invention.

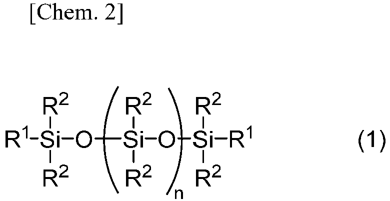

In formula (1), each R¹ is independently a monovalent hydrocarbon group of 1 to 20 carbon atoms which has a primary or secondary amino group.

The monovalent hydrocarbon group of 1 to 20 carbon atoms which has a primary or secondary amino group and is represented by R¹ is exemplified by groups of formula (2) below.

-R³NHR⁴ (2)

In formula (2), R³ is a divalent hydrocarbon group of 1 to 20 carbon atoms, may be linear, branched or cyclic, and is exemplified by alkylene groups of 1 to 20, preferably 1 to 10, carbon atoms; cycloalkylene groups of 3 to 20, preferably 3 to 10, carbon atoms; alkenylene groups of 2 to 20, preferably 2 to 10, carbon atoms; arylene groups of 6 to 20, preferably 6 to 10, carbon atoms; and aralkylene groups of 7 to 20, preferably 7 to 10, carbon atoms.

Specific examples of the divalent hydrocarbon group of R³ include alkylene groups such as methylene, ethylene, trimethylene, propylene, tetramethylene, pentamethylene, hexamethylene, heptamethylene, octamethylene, nonamethylene, decamethylene, dodecamethylene, tetradecamethylene, hexadecamethylene, octadecamethylene, nonadecamethylene and eicosadecylene groups; cycloalkylene groups such as cyclopentylene and cyclohexylene groups; alkenylene groups such as vinylene and propenylene groups; arylene groups such as phenylene, methylphenylene and naphthylene groups; and aralkylene groups such as benzylidene and phenethylene groups.

Of these, R³ is preferably an alkylene group of 1 to 10 carbon atoms; more preferably a methylene, ethylene, trimethylene, propylene, tetramethylene, pentamethylene, hexamethylene, heptamethylene, octamethylene, nonamethylene or decamethylene group; even more preferably a methylene, ethylene, trimethylene or propylene group; and especially an ethylene or trimethylene group.

R⁴ is a hydrogen atom or a monovalent hydrocarbon group of 1 to 20 carbon atoms. The monovalent hydrocarbon group of 1 to 20 carbon atoms may be linear, branched or cyclic, and is exemplified by alkyl groups of 1 to 20, preferably 1 to 10, carbon atoms; cycloalkyl groups of 3 to 20, preferably 3 to 10, carbon atoms; alkenyl groups of 2 to 20, preferably 2 to 10, carbon atoms; aryl groups of 6 to 20, preferably 6 to 10, carbon atoms; and aralkyl groups of 7 to 20, preferably 7 to 10, carbon atoms.

Specific examples of the monovalent hydrocarbon group of R⁴ include alkyl groups such as methyl, ethyl, propyl, butyl, pentyl, hexyl, heptyl, octyl, nonyl, decyl, dodecyl, tetradecyl, hexadecyl and octadecyl groups; cycloalkyl groups such as cyclopentyl and cyclohexyl groups; alkenyl groups such as vinyl and allyl groups; aryl groups such as phenyl, tolyl and naphthyl groups; and aralkyl groups such as benzyl and phenethyl groups.

Of these, R⁴ is preferably a hydrogen atom or an alkyl group of 1 to 6 carbon atoms; more preferably a hydrogen atom or a methyl, ethyl or propyl group; and even more preferably a hydrogen atom or a methyl group.

Specific examples of the group represented by formula (2) include aminomethyl, 2-aminoetha-1-yl, 2-aminopropa-1-yl, 3-aminopropa-1-yl, 2-aminobuta-1-yl, 3-aminobuta-1-yl, 4-aminobuta-1-yl, N-methylaminomethyl, N-methyl-2-aminoetha-1-yl, N-methyl-2-aminopropa-1-yl, N-methyl-3-aminopropa-1-yl, N-methyl-2-aminobuta-1-yl, N-methyl-3-aminobuta-1-yl, N-methyl-4-aminobuta-1-yl, N-ethylaminomethyl, N-ethyl-2-aminoetha-1-yl, N-ethyl-2-aminopropa-1-yl, N-ethyl-3-aminopropa-1-yl, N-ethyl-2-aminobuta-1-yl, N-ethyl-3-aminobuta-1-yl, N-ethyl-4-aminobuta-1-yl, N-butylaminomethyl, N-butyl-2-aminoetha-1-yl, N-butyl-2-aminopropa-1-yl, N-butyl-3-aminopropa-1-yl, N-butyl-2-aminobuta-1-yl, N-butyl-3-aminobuta-1-yl, N-butyl-4-aminobuta-1-yl and 8-aminoocta-1-yl groups.

Of these, aminomethyl, 2-aminoetha-1-yl, 3-aminopropa-1-yl and 8-aminoocta-1-yl groups are preferred; the 3-aminopropa-1-yl group is more preferred.

In formula (1), each R² is independently a monovalent hydrocarbon group of 1 to 20 carbon atoms. Specific examples of the monovalent hydrocarbon groups represented by R² include the same groups as those mentioned for R⁴. Of these, R² is preferably an alkyl group of 1 to 6 carbon atoms, an aryl group of 6 to 8 carbon atoms or a vinyl group; more preferably a methyl, ethyl, propyl, butyl, phenyl or vinyl group; and even more preferably a methyl or phenyl group.

The amine equivalent weight of component (a) is from 235 to 1,500 g/mol, preferably from 300 to 1,500 g/mol, more preferably from 400 to 1,500 g/mol, and even more preferably from 400 to 1,000 g/mol. This amine equivalent weight represents the weight of component (a) per mole of amino groups in component (a). At an amine equivalent weight below 235 g/mol, the resulting cured product becomes excessively hard; at more than 1,500 g/mol, the strength of the cured product is unlikely to increase. The amine equivalent weight is a value measured by the subsequently described neutralization titration method.

The subscript 'n' is a value that satisfies the above range in the amine equivalent weight. Specifically, the range of n is determined by the types of R¹ and R² substituents. For example, when all R² are methyl groups, n is preferably a number from 3 to 24, and more preferably a number from 4 to 19. In formula (1), the siloxane units within parentheses may be bonded in any order.

Specific examples of the organopolysiloxane of formula (1) include, but are not limited to, those mentioned below. In the following formulas, Me represents a methyl group and Ph represents a phenyl group. Of these, organopolysiloxanes of formulas (1-1) to (1-3) are preferred, and organopolysiloxanes of formula (1-1) are more preferred.

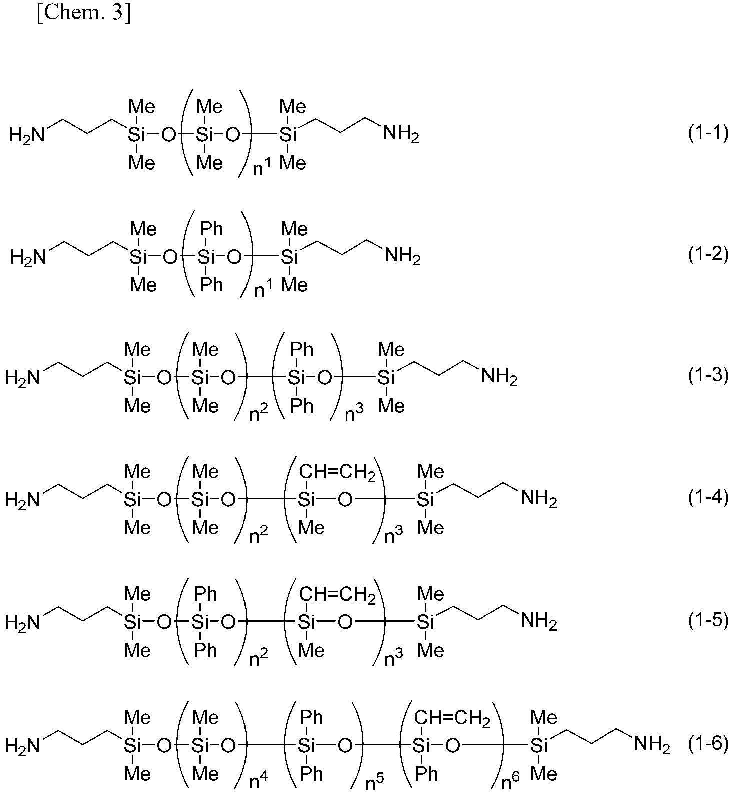

In the above formulas, n¹ to n⁶ are each a number of 1 or more, with n¹ = n, n² + n³ = n, and n⁴ + n⁵ + n⁶ = n. The recurring units may be arranged in any order, for example, as blocks or randomly. Component (a) may be used alone or in combination of two or more.

These organopolysiloxanes may be prepared by a conventional method, for example, by reacting an amino group-containing disiloxane with a cyclic siloxane having any desired substituents under acidic or alkaline conditions. Alternatively, a commercial product may be used.

### [Component (b)]

Component (b) used in the invention is an aliphatic diisocyanate compound having two isocyanate groups per molecule. It is a component that reacts with component (a) above to form the polyurea polymer of the invention.

Component (b) is not particularly limited, so long as it has two isocyanate groups per molecule. Examples include compounds of formula (3) below

OCN-Q-NCO (3)

(wherein Q is a substituted or unsubstituted divalent hydrocarbon group of 1 to 20 carbon atoms).

The divalent hydrocarbon group of 1 to 20 carbon atoms represented by Q may be linear, branched or cyclic, and is exemplified by the same groups as those mentioned for R³. Of these, Q is preferably an alkylene group of 1 to 20 carbon atoms or a cycloalkylene group of 3 to 20 carbon atoms. A combination of these groups may also be used. At least some of the hydrogen atoms of these groups may be replaced with other substituents. Examples of other substituents include alkyl groups of 1 to 3 carbon atoms, such as methyl and ethyl groups.

Specific examples of the isocyanate compound of formula (3) include diisocyanate compounds such as 1,6-hexamethylene diisocyanate, dodecamethylene diisocyanate, trimethylhexamethylene diisocyanate, 1,3-cyclohexylene diisocyanate, 1,4-cyclohexylene diisocyanate, tetramethylxylylene diisocyanate (TMXDI), hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate and 1,3-bis(2-isocyanato-2-propyl)benzene.

Of these, 1,6-hexamethylene diisocyanate, hydrogenated xylylene diisocyanate, 1,4-cyclohexylene diisocyanate, isophorone diisocyanate, 4,4'-dicyclohexylmethane diisocyanate and 1,3-bis(2-isocyanato-2-propyl)benzene are preferred. 4,4'-Dicyclohexylmethane diisocyanate and 1,3-bis(2-isocyanato-2-propyl)benzene are more preferred.

Component (b) may be used alone, or in combination of two, three or more.

The amount of component (b) is not particularly limited, but is preferably from 1 to 50 parts by weight, more preferably from 10 to 45 parts by weight, and even more preferably from 15 to 40 parts by weight, per 100 parts by weight of component (a).

### [Component (c)]

Component (c) used in the invention is an amine compound having two or more amino groups per molecule, and is a component that acts as a chain extender or crosslinking agent for the polyurea polymer of the invention.

The number of amino groups on the amine compound of component (c) is 2 or more, preferably from 2 to 4, more preferably 2 to 3, and even more preferably 2, per molecule.

Component (c) is a compound other than component (a) and, although not particularly limited so long as it has two or more functional groups per molecule, is exemplified by compounds of formula (4) below.

H₂N-R-NH₂ (4)

In formula (4), R is a substituted or unsubstituted divalent hydrocarbon group of 1 to 20 carbon atoms which may be linear, branched or cyclic, and is exemplified by the same groups as those mentioned for R³. A combination of these groups may also be used. At least some of the hydrogen atoms of these groups may be replaced with other substituents. Examples of other substituents include alkyl groups of 1 to 3 carbon atoms, such as methyl and ethyl groups; halogen atoms such as chlorine and bromine atoms; and heteroatom-containing groups such as oxygen and sulfur atoms.

Specific examples of the amine compound of formula (4) include diamines such as ethylenediamine, 1,2-propanediamine, 1,3-propanediamine, 1,4-butanediamine, 1,3-butanediamine, 1,2-butanediamine, 1,5-pentanediamine, 1,4-pentanediamine, 1,3-pentanediamine, 1,2-pentanediamine, 2,5-pentanediamine, 2,4-pentanediamine, 2,3-pentanediamine, 1,6-hexanediamine, 1,5-hexanediamine, 1,4-hexanediamine, 1,3-hexanediamine, 1,2-hexanediamine, 2,6-hexanediamine, 2,5-hexanediamine, 2,4-hexanediamine, 2,3-hexanediamine, 1,8-octanediamine, 1,10-decanediamine, 1,12-dodecanediamine, 2,2,4-trimethylhexamethylenediamine, 2,4,4-trimethylhexamethylenediamine, diaminotoluene, diphenylmethanediamine, 3,3'-dichloro-4,4'-diaminodiphenylmethane, 4,4'-methylenebis(2,6-diethylaniline), 4,4'-methylenebis(2-ethyl-6-methylaniline), 4,4'-methylenebis(aminocyclohexane), diethylmethylbenzenediamine, 4,4'-methylenedianiline, 4,6-diethyl-2-methyl-1,3-phenylenediamine, 2-methyl-4,6-bis(methylthio)-1,3-benzenediamine, 4-methyl-2,6-bis(methylthio)-1,3-benzenediamine, bis(4-amino-2,3-dichlorophenyl)methane (TCDAM), trimethylenebis(4-aminobenzoate), isophoronediamine and 4,4'-diaminodicyclohexylmethane.

Cyclic diamines such as piperazine, and triamines such as diethylenetriamine, bis(hexamethylene)triamine and trisaminoethylamine may also be used.

Of these, isophoronediamine is preferred.

Component (c) may be used alone, or in combination of two, three or more.

The amount of component (c) is not particularly limited, but is preferably from 1 to 20 parts by weight, more preferably from 1 to 15 parts by weight, and even more preferably from 2 to 15 parts by weight, per 100 parts by weight of component (a).

The amount of components (a) to (c) is preferably such that the ratio expressed as {total number of isocyanate groups included in component (b)}/{total number of amino groups included in components (a) and (c)} is preferably from 0.7 to 1.4, more preferably from 0.8 to 1.2, even more preferably from 0.9 to 1.1, and still more preferably from 0.95 to 1.05.

In the synthesis of the polyurea polymer of the invention, other components may also be included, provided that this does not detract from the advantageous effects of the invention. Such other components include polyols (diols) and catalysts.

Specific examples of polyols (diols) include polyether polyols, polyester polyols, polycarbonate polyols, ethylene glycol, 1,2-propanediol, 1,3-propanediol, 1,4-butanediol, 1,3-butanediol, 1,2-butanediol, 1,5-pentanediol, 1,4-pentanediol, 1,3-pentanediol, 1,2-pentanediol, 2,5-pentanediol, 2,4-pentanediol, 2,3-pentanediol, 1,6-hexanediol, 1,5-hexanediol, 1,4-hexanediol, 1,3-hexanediol, 1,2-hexanediol, 2,6-hexanediol, 2,5-hexanediol, 2,4-hexanediol, 2,3-hexanediol, neopentyl glycol and methylpentanediol. Additional examples include trifunctional alcohols such as glycerol and trimethylolpropane, tetrafunctional alcohols such as pentaerythritol and α-methylglycoside, hexafunctional alcohols such as sorbitol and sucrose, and alkanolamines such as monoethanolamine, diethanolamine and triethanolamine.

Specific examples of catalysts include amine compounds such as triethylamine, N,N-dimethylcyclohexylamine, N,N,N',N'-tetramethylethylenediamine, N,N,N',N'-tetramethylhexamethylenediamine, N,N,N',N",N"-pentamethyldiethylenetriamine, N,N,N',N",N"-pentamethyldipropylenetriamine, triethylenediamine, N-methyl-N'-(2-dimethylaminoethyl)piperazine, N-ethylmorpholine, 1,2-dimethylimidazole, dimethylethanolamine, dimethylaminoethoxyethanol, N,N,N'-trimethylaminoethylethanolamine, N-methyl-N'-(2-hydroxyethyl)piperazine and bis(2-dimethylaminoethyl) ether; organotitanium compounds such as tetraisopropoxytitanium, tetra-n-butoxytitanium, tetra-t-butoxytitanium, titanium diisopropoxide bis(acetylacetonate), titanium tetra-2-ethylhexoxide and titanium diisopropoxide bis(ethyl acetoacetate); organozirconium compounds such as zirconium tetrabutoxide, zirconium tetrapropoxide, tetrakis(2,4-pentanedionato)zirconium and zirconium dibutoxybis(ethyl acetoacetate); and organotin compounds such as dibutyltin diacetate and dibutyltin dilaurate.

### [2] Method for Preparing Polyurea Polymer

The method for preparing (synthesizing) the polyurea polymer of the invention is not particularly limited. Any method conventionally used for preparing polyurea resins may be used, such as a prepolymer method or a one-shot method.

In the prepolymer method, component (a) and component (b) are reacted, following which component (c) is added and reacted. When component (a) and component (b) are reacted, either component (b) may be added to component (a) or component (a) may be added to component (b), although it is preferable to add component (b) to component (a).

The above reaction may be carried out in the absence of a solvent, although it is preferable to use a solvent. The solvent may be added to component (a) or may be added to component (b). Alternatively, the solvent may be added after mixing together components (a) and (b), or components (a) and (b) may be added to the solvent. Moreover, when component (c) is added following the reaction of component (a) with component (b), the solvent may be added at the same time as component (c) or may be added before adding component (c) or after adding and reacting component (c). Addition of the above components may be carried out dropwise or all at once.

The reaction temperature, although not particularly limited, is preferably between 10°C and 150°C, more preferably between 15°C and 100°C, and even more preferably between 20°C and 60°C. The reaction time also is not particularly limited, and is preferably from 10 minutes to 20 hours, more preferably from 10 minutes to 15 hours, and even more preferably from 0.5 to 15 hours.

As for the one-shot method, it is a method in which component (a), component (b) and component (c) are reacted at the same time.

The reaction temperature, although not particularly limited, is preferably between 10°C and 150°C, more preferably between 15°C and 100°C, and even more preferably between 20°C and 60°C. The reaction time also is not particularly limited, and is preferably from 10 minutes to 10 hours, and more preferably from 0.5 to 5 hours.

In this invention, it is preferable to use the prepolymer method, and more preferable to use the prepolymer method and react components (a) to (c) in a solvent. The method of mixing together component (a) and the solvent, subsequently adding and reacting component (b), and then adding and further reacting component (c) is even more preferred. Other components may be added to components (a) to (c) at any time.

Solvents that may be used in the above reaction are not particularly limited, although an alcohol having one secondary hydroxyl group or tertiary hydroxyl group per molecule is preferred. Such alcohols are not particularly limited so long as they have one secondary hydroxyl group or tertiary hydroxyl group per molecule. Examples include isopropyl alcohol, 2-butanol, 2-methyl-2-propanol, 2-pentanol, 3-pentanol, 2-methyl-2-butanol, 3-methyl-2-butanol, cyclohexanol, 1-methoxy-2-propanol, 2-heptanol, 3-heptanol, 4-heptanol and 1-ethoxy-2-propanol.

Of these, isopropyl alcohol, 2-methyl-2-butanol, 2-butanol and 1-methoxy-2-propanol are preferred.

The boiling point of the solvent is preferably 200°C or less, more preferably between 50°C and 180°C, even more preferably between 60°C and 150°C, and still more preferably between 70°C and 120°C.

When a solvent is used, the amount of addition is preferably at least 10 parts by weight, more preferably at least 40 parts by weight, even more preferably at least 100 parts by weight, and still more preferably at least 200 parts by weight, per 100 parts by weight of components (a) to (c) and other components combined. Although there is no particular upper limit, the amount of addition is preferably not more than 300 parts by weight, and more preferably not more than 250 parts by weight.

Following reaction completion, the polyurea polymer of the invention can be obtained by drying at preferably between 20°C and 200°C, and more preferably between 20°C and 150°C, for a period of preferably from 1 to 30 hours, and more preferably from 5 to 20 hours.

Carrying out this drying step in a nitrogen or other inert gas atmosphere or under a reduced pressure of 700 Pa or less is desirable for suppressing deterioration of the product.

The weight-average molecular weight of the polyurea polymer of the invention, although not particularly limited, is preferably from 4,000 to 500,000, more preferably from 10,000 to 300,000, even more preferably from 10,000 to 100,000, and still more preferably from 15,000 to 50,000. The weight-average molecular weight is a value determined by gel permeation chromatography (GPC) relative to a polymethyl methacrylate standard.

The polyurea polymer of the invention preferably has the Shore A hardness measured under the following conditions of at least 50, and more preferably at least 60.

The tensile strength is preferably at least 10 MPa, and more preferably at least 12 MPa.

### [Method for Measuring Hardness]

A 2-mm-thick sheet is fabricated by pressing and melt-molding the polyurea polymer of the invention at a given temperature, following which it is left to stand at 25°C for two or more days. Three sheets thus obtained are stacked, and the hardness is measured using a Shore A durometer.

### [Measurement of Tensile Strength]

The polyurea polymer of the invention is pressed at 235°C for 10 minutes under a pressure of 10 MPa, obtaining a 1-mm-thick cured sheet. A number 6 dumbbell specimen (JIS K7312: 1996) is die-cut from this sheet, and the tensile strength is measured at a test rate of 100 mm/min.

### [3] Polyurea Composition

The polyurea composition of the invention contains (A) the above polyurea polymer, and (B) an alcohol having one secondary hydroxyl group or tertiary hydroxyl group per molecule.

### [Component (A)]

Component (A) is the above polyurea polymer. The amount of which is preferably from 10 to 50 wt%, and more preferably from 20 to 40 wt%, of the composition.

### [Component (B)]

Component (B) used in this invention is an alcohol having one secondary hydroxyl group or tertiary hydroxyl group per molecule, and can be served as a diluting solvent in the polyurea composition of the invention.

Component (B) is not particularly limited, provided that it has one secondary hydroxyl group or tertiary hydroxyl group per molecule. Examples include the same compounds as the solvent used in preparing the above-described polyurea polymer of the invention.

The amount of component (B) is preferably at least 10 parts by weight, more preferably at least 40 parts by weight, even more preferably at least 100 parts by weight, and still more preferably at least 200 parts by weight per 100 parts by weight of the polyurea polymer (A). At too small amount, it may be immiscible with the polyurea polymer. Although there is no particular upper limit, the content is preferably not more than 300 parts by weight, and more preferably not more than 250 parts by weight.

### [Other Components]

Components other than components (A) and (B) may be included in the inventive composition within ranges that do not detract from the advantageous effects of the invention. Examples of such other components include antioxidants, ultraviolet absorbers, light stabilizers and solvents other than component (B).

Specific examples of antioxidants include hindered phenol-type antioxidants, amine-type antioxidants, phosphorus-containing antioxidants and sulfur-containing antioxidants.

Specific examples of ultraviolet absorbers include benzotriazole-type ultraviolet absorbers, triazine-type ultraviolet absorbers, benzophenone-type ultraviolet absorbers and benzoate-type ultraviolet absorbers.

Specific examples of light stabilizers include hindered amine-type light stabilizers.

Specific examples of solvents include solvents other than component (B), such as toluene, xylene, benzene, hexane, cyclohexane, methyl cyclohexane, ethyl cyclohexane, tetrahydrofuran (THF), diethyl ether, acetone, methyl ethyl ketone, acetonitrile, ethyl acetate and butyl acetate.

### [4] Method for Preparing Polyurea Composition

The method for preparing the polyurea composition of the invention is not particularly limited. The polyurea composition can be obtained by mixing together above components (A) and (B) and, if necessary, other components by a conventional method. Other components can be added to components (A) and (B) at any desired timing.

In the invention, following the reaction of components (a) to (c) in the alcohol of component (B) and synthesis of the polyurea polymer of component (A), the polyurea composition of the invention can be obtained directly upon reaction completion as a solution of the polyurea polymer of component (A) dissolved in the alcohol of component (B).

The polyurea composition of the invention forms a resin or elastomer having thermoplasticity depending on its formulation. By using an alcohol having a functionality of three or more, it can also be rendered into a thermosetting composition.

A known method may be used without particular limitation to mold the polyurea composition of the invention. For example, the composition may be cut into pellets using a twin-screw extruder and subsequently processed into molded or formed products by using various commonly used molding or forming machines, such as an extruder, injection molding machine, calendering machine or press machine.

The polyurea composition of the invention can be suitably used either in a liquid state in which the polyurea polymer (A) is dissolved in component (B) or in a liquid state of two, three or more liquids in which the prepolymer and the chain extender are separated, and as a primer coating agent or top coating agent for various plastics such as polyester, nylon, polyvinyl chloride, ABS, OPP and CPP. Moreover, it can be used as various types of fibers, including elastomeric fibers; as a paint, surface coating material or sealant for knit and woven fabrics composed of various fibers, nonwoven fabrics, paper, natural leather, artificial leather, synthetic leather and wood; and in rollers for office equipment, shoes, ski boots, adhesives, sealing materials, wood binders, thermoplastic elastomers and thermoset elastomers.

### EXAMPLES

Examples of the invention and Comparative Examples are given below by way of illustration, although the invention is not limited by these Examples.

The compounds used were as follows.

Components (a-1) to (a-3), (a'-4), and (a'-5) of component (a) have the formula (1) wherein R¹ is -CH₂CH₂CH₂NH₂, R² is -CH₃, and n is a value corresponding to each amine equivalent weights.

The method for measuring the amine equivalent weight was as follows.

### [Method for Measuring Amine Equivalent Weight]

Measurement was carried out under the following conditions with the COM-1750 automatic titrator (Hiranuma Co., Ltd.) and using the GR-511B glass reference combination electrode.

The sample was weighed out in a beaker, 25 mL each of toluene and IPA were added and stirred, and neutralization titration was carried out with 0.1 N hydrochloric acid.

### Component (A)

### • Component (a)

| | |
|---|---|
| (a-1) | amine equivalent weight, 430 g/mol |
| (a-2) | amine equivalent weight, 770 g/mol |
| (a-3) | amine equivalent weight, 1,500 g/mol |
| (a'-4) | amine equivalent weight, 2,140 g/mol |
| (a'-5) | amine equivalent weight, 5,300 g/mol |

### • Component (b)

| | |
|---|---|
| H-MDI: | 4,4'-Dicyclohexylmethane diisocyanate (isomer mixture) |
| TMXDI: | 1,3-Bis(2-isocyanato-2-propyl)benzene |

### • Component (c)

| | |
|---|---|
| IPDA: | Isophoronediamine (cis- and trans- mixture) |

### Component (B)

| | |
|---|---|
| IPA: | Isopropyl alcohol |

### [1] Preparation of Polyurea Polymers and Evaluation of Their Properties

### [Example 1-1]

After mixing together 70 parts by weight of component (a-1) and 233.33 parts by weight of IPA, 26.81 parts by weight of H-MDI was added at 20°C and reacted for 1 hour. Next, 3.20 parts by weight of IPDA was added at 20°C and reacted for 12 hours.

The reaction mixture was transferred into a polytetrafluoroethylene tray and dried for 12 hours at room temperature, following which it was dried in a vacuum dryer at 120°C and 1 mmHg for 5 hours, obtaining a solid mass.

### [Measurement of Weight-Average Molecular Weight]

The weight-average molecular weight of the resulting polyurea polymer (solid mass) was determined by gel permeation chromatography (GPC) relative to a polymethyl methacrylate standard.

### [Measurement Conditions]

| | |
|---|---|
| Apparatus: | HLC-8320 GPC (Tosoh Corporation) |
| Developing solvent: | hexafluoro-2-propanol (HFIP) to which 5 mM of sodium trifluoroacetate has been added |
| Flow rate: | 0.2 mL/min |
| Detector: | refractive index detector (RI) |
| Columns: | two TSK Guardcolumn SuperH-L TSKgel SuperHM-N (4.6 mm I.D. × 15 cm) columns (both from Tosoh Corporation) |
| Column temperature: | 40°C |
| Amount of sample injected: | 50 µL (as 0.5 wt% solution in developing solvent) |

### [Measurement of Tensile Strength and Elongation at Break]

The resulting solid mass was press-molded at 235°C for 10 minutes under a pressure of 10 MPa, obtaining a 1-mm-thick cured sheet. Number 6 dumbbell specimens (JIS K7312: 1996) were die-cut from this sheet, and the tensile strength and elongation at break were measured at a test rate of 100 mm/min.

### [Measurement of Hardness]

The resulting solid mass was pressed and melt-molded at the temperature indicated in Table 2, obtaining a 2-mm-thick sheet, following which the sheet was left at 25°C for at least 2 days. Three sheets were stacked, and the hardness was measured using a Shore A durometer.

The formulation is shown in Table 1, and the evaluation results are presented in Table 2.

### [Examples 1-2 and 1-3]

The same procedure was carried out as in Example 1-1 to obtain solid masses for Examples 1-2 and 1-3. The properties of the resulting solid masses were evaluated in the same way as in Example 1-1.

The amount of IPA used was the same as in Example 1-1. The formulations are shown in Table 1 and the evaluation results are presented in Table 2.

### [Comparative Examples 1-1 and 1-2]

The same procedure was carried out as in Example 1 to obtain solid masses for Comparative Examples 1-1 and 1-2.

The amount of IPA used was the same as in Example 1-1. The formulations are shown in Table 1, and the evaluation results are presented in Table 2.

**[Table 1]**

| Formulation | | Component (a) | | | Component (b) | | | Component (c) | | | Component (A) |
|---|---|---|---|---|---|---|---|---|---|---|---|
| | | (a) | pbw | Number of equivalents | Name of component | pbw | Number of equivalents | Name of component | pbw | Number of equivalents | Weight-average molecular weight |
| Example | 1-1 | a-1 | 70 | 0.797 | H-MDI | 26.81 | 1.00 | IPDA | 3.20 | 0.184 | 17,300 |
| | 1-2 | a-2 | 80 | 0.773 | H-MDI | 17.63 | 1.00 | IPDA | 2.37 | 0.207 | 47,300 |
| | 1-3 | a-3 | 73.53 | 0.343 | H-MDI | 18.73 | 1.00 | IPDA | 7.74 | 0.637 | 30,000 |
| Comparative Example | 1-1 | a'-4 | 80 | 0.348 | H-MDI | 14.17 | 1.00 | IPDA | 5.83 | 0.632 | 176,000 |
| | 1-2 | a'-5 | 80 | 0.146 | TMXDI | 12.64 | 1.00 | IPDA | 7.36 | 0.835 | 277,000 |

**[Table 2]**

| | | Physical properties | | | |
|---|---|---|---|---|---|
| | | Tensile strength (MPa) | Elongation at break (%) | Hardness | |
| | | | | Pressing temperature (°C) | Shore A |
| Example | 1-1 | 22.0 | 140 | 235 | 98 |
| | 1-2 | 15.0 | 290 | 235 | 90 |
| | 1-3 | 12.9 | 190 | 220 | 81 |
| Comparative Example | 1-1 | 7.8 | 210 | 225 | 55 |
| | 1-2 | 4.8 | 550 | 225 | 41 |

As shown in Table 2, the polyurea polymers of Examples 1-1 to 1-3 had Shore A hardnesses of at least 50 and tensile strengths of at least 10 MPa.

### [2] Preparation of Polyurea Composition

### [Example 2-1]

After mixing together 70 parts by weight of component (a-1) and 233.33 parts by weight of IPA, 26.81 parts by weight of H-MDI was added at 20°C and reacted for 1 hour. Next, 3.20 parts by weight of IPDA was added at 20°C and reacted for 12 hours, synthesizing a polyurea polymer. Following reaction completion, a polyurea composition was obtained as a solution of the polyurea polymer dissolved in IPA.

### [Examples 2-2 and 2-3]

The same procedure was carried out as in Example 2-1 to obtain the polyurea compositions in Examples 2-2 and 2-3 as solutions of the respective polyurea polymers dissolved in IPA. The formulations were the same as the respective formulations in Examples 1-2 and 1-3. The amount of IPA used was the same as in Example 2-1.

### [Comparative Examples 2-1 and 2-2]

The same procedure was carried out as in Example 2-1 to obtain polyurea compositions for Comparative Examples 2-1 and 2-2 as solutions of the respective polyurea polymers dissolved in IPA. The formulations were the same as the respective formulations in Comparative Examples 1-1 and 1-2. The amount of IPA used was the same as in Example 2-1.

### [Example 2-4]

After mixing together 70 parts by weight of component (a-1) and 233.33 parts by weight of IPA, 26.81 parts by weight of H-MDI was added at 20°C and reacted for 1 hour. Next, 3.20 parts by weight of IPDA was added at 20°C and reacted for 12 hours.

The reaction mixture was transferred into a polytetrafluoroethylene tray and dried for 12 hours at room temperature, following which it was dried in a vacuum dryer at 120°C and 1 mmHg for 5 hours, obtaining a solid mass.

Upon addition of 70 parts by weight of IPA to 30 parts by weight of the resulting solid mass, it dissolved again to give the composition.

## Claims

1. A polyurea polymer that is a reaction product of:
(a) an amino group-containing organopolysiloxane of general formula (1) below which has an amine equivalent weight of from 235 to 1,500 g/mol 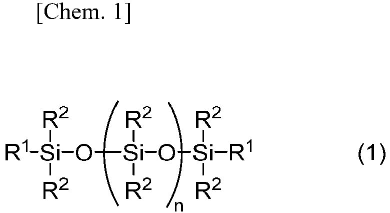 (wherein each R¹ is independently a monovalent hydrocarbon group of 1 to 20 carbon atoms which has a primary or secondary amino group, each R² is independently a monovalent hydrocarbon group of 1 to 20 carbon atoms, n is a value that satisfies the amine equivalent weight, and the siloxane units within parentheses may be bonded in any order),
(b) an aliphatic diisocyanate compound having two isocyanate groups per molecule, and
(c) an amine compound having two or more amino groups per molecule (exclusive of component (a)).

2. The polyurea polymer of claim 1, wherein component (c) is a compound of formula (4) below
H₂N-R-NH₂ (4)
(wherein R is a substituted or unsubstituted divalent hydrocarbon group of 1 to 20 carbon atoms).

3. A method for preparing the polyurea polymer of claim 1 or 2, comprising the step of reacting components (a) to (c) in an alcohol having one secondary hydroxyl group or tertiary hydroxyl group per molecule to form a polyurea polymer.

4. A polyurea composition comprising:
(A) the polyurea polymer of claim 1 or 2, and
(B) an alcohol having one secondary hydroxyl group or tertiary hydroxyl group per molecule.

5. The polyurea composition of claim 4 which is a solution of the polyurea polymer of component (A) dissolved in the alcohol of component (B).

6. A method for preparing the polyurea composition of claim 5, comprising the step of reacting components (a) to (c) in the alcohol of component (B) to synthesize the polyurea polymer of component (A), thereby obtaining a polyurea composition which is a solution of the polyurea polymer of component (A) dissolved in the alcohol of component (B).
